# EUROPÄISCHE PATENTANMELDUNG

(11) **EP 3 431 441 A1**
(43) Veröffentlichungstag der Anmeldung: **23.01.2019**
(21) Anmeldenummer: 17182333.9
(22) Anmeldetag: 20.07.2017
(51) Int. Cl.: C01D 7/00, C01D 7/07, C09K 3/18, C02F 1/58, B01D 53/62

(54) **VERFAHREN ZUR HERSTELLUNG VON KALIUMKARBONAT**

(71) Anmelder: Lengheim, Hubert, 2213 Bockfliess (AT)
(72) Erfinder: Lengheim, Hubert, 2213 Bockfliess (AT)
(74) Vertreter: Sonn & Partner Patentanwälte

(57) **Zusammenfassung**

Die vorliegende Erfindung betrifft ein Verfahren zur Herstellung von Kaliumkarbonat (K₂CO₃) durch Wäsche von Kohlendioxid-haltigen Abgasen, wobei Kaliumchlorid- oder Kaliumhydroxid-haltige industriell anfallende Abwässer als Waschlösung eingesetzt werden. Zum einen wird durch das erfindungsgemäße Verfahren die Entsorgungslogistik der industriell anfallenden Abwässer begünstigt, und zum anderen wird die CO₂-Belastung im Abgas von Industrieanlagen verringert.

## Beschreibung

Die vorliegende Erfindung betrifft ein Verfahren zur Herstellung von Kaliumkarbonat (K₂CO₃).

Kaliumkarbonat oder Pottasche wurde ursprünglich durch Verbrennen von Holz, hauptsächlich von Buche und Eiche, gewonnen. Dabei wurde die salzhaltige Asche in Wasser gelöst und die löslichen Salze in mehreren Arbeitsgängen durch Auslaugung getrennt. Die Lauge wurde schließlich in eisernen Pötten eingedampft und die Rückstände zu Pottasche gebrannt. Moderne Methoden verwenden Kalilauge oder Kalkmilch und Kaliumsulfat als Grundbaustein um unter Einwirkung von Kohlenstoffdioxid Kaliumkarbonat herzustellen.

Ein alternatives Verfahren zur Herstellung von Kaliumkarbonat ist beispielsweise in der EP 1 741 673 A beschrieben, wonach aus biogener Asche von beispielsweise Holzhackgut, Baumrinde oder Sägespänen durch Karbonatisierung mit Kohlendioxid-hältiger Abluft Kaliumkarbonat gewonnen wird.

Der Großteil des weltweit produzierten Kaliumkarbonats findet Verwendung in der Düngemittel-, Glas-, und Lebensmittelindustrie, bei der Seifen- und Emailherstellung und als Ausgangsprodukt für andere Kaliumverbindungen, wie zum Beispiel Kaliumhydrogenkarbonat.

Kaliumkarbonat ist weiters auch als ökologisch alternatives Auftau- und Gefrierschutzmittel bekannt ("die Umweltberatung", Heißes Thema: Eis und Schnee; Verband Österreichischer Umweltberatungsstellen, Wien, Fachbereich Wasser, November 2003). Das häufigste verwendete Streumittel ist jedoch aus Kostengründen nach wie vor Natriumchlorid, mitunter werden auch Calciumchlorid, Magnesiumchlorid und deren Mischungen mit Natriumchlorid verwendet.

Grundsätzlich werden Auftaumittel als Trocken- oder Feuchtsalz auf die Straßen aufgebracht. Unter Feuchtsalz versteht man trockenes Auftausalz, welches kurz vor dem Aufbringen mit einer Lösung angefeuchtet wird. Im Gegensatz zu Trockensalz haftet Feuchtsalz besser auf der Straße und weist eine höhere Tauwirksamkeit auf. Die Verwendung von Chloridhaltigen Auftausalzen hat jedoch negative Auswirkungen auf Bäume und Pflanzen, da die Chloride die Wasseraufnahme in den Wurzeln beeinträchtigt. Dies führt zu Nährstoffmangelerscheinungen und Verätzungen von Pflanzenteilen bis hin zum Absterben der betroffenen Pflanzen bzw. Bäumen.

Da Kalium für die Regulierung des Wasserhaushalts in Pflanzen verantwortlich ist, führen hohe Kaliumkonzentrationen in der Pflanze sowohl zur Festigung der Zellwände und somit zur Verbesserung der Frostresistenz als auch zu einer erhöhten Resistenz gegenüber Krankheiten. Um ökologische Folgeschäden zu vermeiden und auch ein verbessertes Wachstum von Pflanzen und Bäumen auf Nebenstraßen zu gewährleisten, wird daher die Verwendung von Kaliumkarbonat als Auftau- und Gefrierschutzmittel bevorzugt.

Kalium kommt in der Natur in zahlreichen Mineralien vor und ist ein Hauptnährelement der Pflanzen, da es ihr Wachstum fördert.

Ablagerungen von Salzmineralien mit hohem Gehalt an Kaliumverbindungen werden als Kalisalze bezeichnet. Bis heute werden die natürlichen Kalivorkommen weltweit überwiegend in fester Form im konventionellen Bergbau unter Tage gewonnen. Seit über 100 Jahren wird beispielsweise im Werragebiet an der hessisch-thüringischen Grenze Bergbau betrieben, um Kalidünger für den Einsatz in der Landwirtschaft zu gewinnen. Der Anteil an Wertstoffen im gewonnenen Rohsalz beträgt jedoch lediglich maximal 30 Prozent, die restlichen 2/3 der Fördermenge (ca. 20 Mio. t pro Jahr), entweder in fester oder flüssiger Form, werden als Abfälle entsorgt. Feste Rückstände aus der Kaliproduktion werden zum Großteil aufgehaldet oder durch Versatz entsorgt. Die Entsorgung der ebenfalls anfallenden Salzabwässer, beispielsweise der Haldenabwässer, erfolgt hingegen durch Einleitung z.B. in die Werra oder durch Versenkung in den Untergrund. Die Entsorgungswege der beim Kalibergbau entstehenden Salzabwässer sind bereits seit längerem umstrittene Methoden, da sich das versenkte Abwasser unkontrolliert ausbreitet und auf Grund des hohen Mineralgehalts eine Gefahr für das Grundwasser darstellt. Die Entsorgung des Salzabwassers stellt also nicht nur ein wirtschaftliches Problem dar, sondern auch ein enorm umweltrelevantes. Alternative Wege der Kalilaugen-Entsorgung werden daher dringend benötigt um die derzeitige Umweltsituation zu verbessern.

Die Salzabwässer aus der Kaliproduktion setzen sich im Wesentlich aus Natrium, Kalium, Magnesium, Chlorid und Sulfat in gelöster Form zusammen. Die tatsächliche chemische Zusammensetzung der Salzabwässer hängt jedoch von verschiedenen Faktoren, wie z.B. der Rohstoffzusammensetzung bzw. der Qualität des Ausgangsmaterials, dem gewählten Aufbereitungsverfahren sowie dem herzustellenden Endprodukt und seiner erforderlichen Qualität ab. Die chemische Zusammensetzung der auch bei der Aufhaldung anfallenden Salzabwässer ist abhängig von der Zusammensetzung des aufgehaldeten Rückstands. Eine typische Zusammensetzung der aufgehaldeten Rückstände ist in Tabelle 1 gezeigt. In Tabelle 2 werden prognostizierte jährliche Volumina und mittlere Zusammensetzungen der Hauptkomponenten in verschiedenen Salzabwasserarten verschiedener Standorte der K+S Kali GmbH aufgezeigt.

**Tabelle 1: Typische Zusammensetzung von Kalihalden (Gew.%)**

| | |
|---|---|
| Steinsalz (NaCl) | 70-95 |
| Kieserit (MgSO₄xH₂O) | 0,5-30 |
| Anhydrit/Gips (CaSO₄) | 0,5-25 |
| Kalisalzreste (KCl) | 1-3 |
| Ton, unlösliche Bestandteile | 0,5-5 |

**Tabelle 2: Prognostizierte jährlich anfallende Volumina und mittlere Zusammensetzungen von Salzabwasserarten im Werk Werra; HA KDW, Hattorf Kieseritdeckwasser; HA E-Lsg. KKF, Hattdorf "E-Lösung" Kainit-Kristallisations-Flotations-Anlage; WI KDW, Wintershall Kieseritdeckwasser; WI Q-Lsg., Wintershall Q-Lösung aus dem Heißlöseprozess; WI E-Lsg., Wintershall "E-Lösung", HA HW, Hattorf Haldenwasser, WI HW, Wintershall Haldenwasser; NE HW, Neuhof-Ellers Haldenwasser(Ergänzungsfernleitung zur Entsorgung der Salzabwässer aus dem hessisch-thüringischen Kalirevier an die Oberweser, Antragsunterlagen zum Raumordnungsverfahren, Stand 20.11.2015).**

| Salzabwasserstrom | Volumen [m³] | KCl [g/l] | MgCl₂ [g/l] | MgSO₄ [g/l] | NaCl [g/l] | Cl-/Mg²⁺ [g/l] |
|---|---|---|---|---|---|---|
| HA KDW | 352000 | 57 | 38 | 50 | 164 | 7,8 |
| HA E-Lsg. KKF | 1400000 | 46 | 299 | 38 | 29 | 3,1 |
| WI KDW | 353000 | 59 | 35 | 85 | 200 | 6,7 |
| WI Q-Lsg. | 403000 | 88 | 145 | 68 | 103 | 4,2 |
| WI E-Lsg. | 536000 | 52 | 278 | 46 | 36 | 3,2 |
| HA HW | 858000 | 40 | 65 | 85 | 168 | 5 |
| WI HW | 881000 | 43 | 67 | 102 | 173 | 4,6 |
| NE HW | 770000 | 36 | 58 | 75 | 122 | 4,5 |

Ein weiteres industrielles Verfahren bei welchem Kalilauge (eine wässrige Lösung von Kaliumhydroxid) und/oder Kaliumhaltiges Abwasser anfällt, ist beispielsweise die Biodiesel-Produktion. Biodiesel wird durch Umesterung von pflanzlichen oder tierischen Fetten und Ölen mit einwertigen Alkoholen gewonnen. Starke Basen, darunter auch Kaliumhydroxid, werden bei der Umesterung von Triglyzeriden mit Methanol zu Methylester als Katalysatoren eingesetzt. Der Katalysator muss jedoch am Ende dieses Verfahrens wieder vom Endprodukt abgetrennt werden. Abhängig vom Biodiesel-Herstellungsverfahren erfolgt die Abtrennung des Katalysators entweder durch eine mehrstufige Wäsche mit Wasser in sogenannten Waschseparatoren, wobei ein Gemisch aus Wasser, Katalysator, Seife und geringen Mengen an Glycerin entsteht, oder durch Aufspaltung der Katalysatorhaltigen Glycerinphase mit Säure, wodurch die Fettsäurephase weiter mit einem sauren Katalysator verestert wird und die restlichen Bestandteile, wie der basische Katalysator, als Feststoffe ausfallen.

Andererseits haben die derzeit verwendeten Herstellungsverfahren von Kaliumkarbonat zur Folge, dass Kaliumkarbonat um etwa das vierfache teurer ist als Natriumchlorid. Aus diesem Grund wird trotz der besseren Umweltverträglichkeit des Kaliumkarbonats immer noch primär das Natriumchlorid als Auftau- und Gefrierschutzmittel eingesetzt. Das in der EP 1 741 673 A beschriebene Herstellungsverfahren von Kaliumkarbonat aus biogener Masse hat in diesem Zusammenhang den Nachteil, dass es langfristig zu großflächiger Abholzung führt.

Die Aufgabe der vorliegenden Erfindung besteht darin, ausgehend vom oben dargelegten Stand der Technik, ein wirtschaftlich und ökologisch verbessertes Verfahren zur Herstellung von Kaliumkarbonat (K₂CO₃) durch Wäsche von Kohlendioxid-haltigen Abgasen bereitzustellen, wobei das Kaliumkarbonat, welches in weiterer Folge vorzugsweise zur Verwendung als Auftau- und Gefrierschutzmittel eingesetzt werden kann, erfindungsgemäß aus industriell anfallenden Abwässern gewonnen wird.

Unter industriell anfallendem Abwasser werden im Rahmen der vorliegenden Erfindung alle jene Abwässer verstanden, die bei Produktions- und Verarbeitungsprozessen in der Industrie anfallen und, gegebenenfalls nach Konzentration, eine ausreichende Menge an Kaliumionen enthalten um Kohlendioxid unter Bildung von Kaliumcarbonat aus einem Kohlendioxid-haltigen Abgas zu waschen. Gemäß einem bevorzugten Merkmal des erfindungsgemäßen Verfahrens kommt als industriell anfallendes Abwasser jede Art von Abwasser in Betracht, welches Kaliumchlorid oder Kaliumhydroxid gegebenenfalls nach Konzentration, in einer ausreichenden Menge enthält um Kohlendioxid unter Bildung von Kaliumcarbonat aus einem Kohlendioxid-haltigen Abgas zu waschen, in einer besonders bevorzugten Ausführungsform des erfindungsgemäßen Verfahrens ist das industriell anfallende Abwasser Kaliumchlorid-haltiges Abwasser. In einer alternativen besonders bevorzugten Ausführungsform der vorliegenden Erfindung ist das industriell anfallende Abwasser Kaliumhydroxid-haltiges Abwasser.

Gemäß noch einer bevorzugten Ausführungsform der vorliegenden Erfindung wird als industriell anfallendes Abwasser ein bei der Biodiesel-Produktion anfallendes Waschabwasser verwendet. Voraussetzung für die Eignung des bei der Biodiesel-Produktion anfallenden Waschabwassers für die vorliegende Erfindung ist, dass die basische Umesterung der Fettsäuretriglyceride im Biodiesel-Produktionsverfahren mit Kaliumhydroxid erfolgt, welches mit dem sauren Katalysator ein Salz bildet. Durch Phasentrennung wird der bei der Umesterung entstehende Biodiesel vom Umesterungsgemisch abgetrennt, welches Umesterungsgemisch, gegebenenfalls nach Konzentration, als industriell anfallendes Waschabwasser in einer bevorzugten Ausführungsform der vorliegenden Erfindung verwendet werden kann, solange es eine ausreichende Menge an Kaliumionen enthält um Kohlendioxid unter Bildung von Kaliumcarbonat aus einem Kohlendioxid-haltigen Abgas zu waschen. Auch die bei der Biodiesel-Produktion anfallenden Waschabwässer der darauffolgenden Reinigungsschritte des Umesterungsgemisches können, gegebenenfalls nach Konzentration, gemäß dem erfindungsgemäßen Verfahren verwendet werden. Diese wässrigen Gemische setzen sich aus nicht umgesetztem Monoalkohol, basischem Katalysator enthalten ein Kaliumsalz und Glycerin zusammen. Ein Verfahren zur Aufreinigung und Trennung der Bestandteile des industriell anfallenden Biodiesel-Abwassers ist zum Beispiel in DE 102 43 700 A1 beschrieben.

Gemäß einer weiteren bevorzugten Ausführungsform der vorliegenden Erfindung ist vorgesehen, dass ein beim Kalibergbau anfallendes Haldenabwasser zur Herstellung von Kaliumkarbonat verwendet wird. Dieses Haldenabwasser kann gegebenenfalls konzentriert werden, Voraussetzung für den Einsatz im erfindungsgemäßen Verfahren ist jedenfalls, dass das Abwasser eine ausreichende Menge an Kaliumionen enthält um Kohlendioxid unter Bildung von Kaliumcarbonat aus einem Kohlendioxid-haltigen Abgas zu waschen. Vorzugsweise werden im erfindungsgemäßen Verfahren jene Haldenabwässer eingesetzt, welche im Vergleich zum Natriumchlorid-Gehalt einen relativ hohen Gehalt an Kaliumionen bzw. Kaliumchlorid aufweisen. Dies begünstigt die gegebenenfalls notwendige Abtrennung von Natriumchlorid vor Einsatz des Abwassers im erfindungsgemäßen Verfahren. Die Reinigung und/oder Auftrennung des Haldenabwassers erfolgt vorzugsweise durch dem Fachmann bekannte thermische Trennverfahren. Abhängig von der Zusammensetzung des Haldenabwassers können unterschiedliche Reinigungs- und/oder Trennverfahren notwendig sein. Als Beispiel dient die Gewinnung von Natriumchlorid (NaCl) aus Bittern (Endlösungen) von Meeressalinen (siehe Beispiel 1, DE 102 56 046 A1). Endprodukte von Reinigungs- und/oder Trennverfahren von Haldenabwässern, welche gemäß des erfindungsgemäßen Verfahrens Verwendung finden, sind Kaliumsalze in gelöster oder kristalliner Form. In einer bevorzugten Ausführungsform der vorliegenden Erfindung ist das industriell anfallende Haldenabwasser Kaliumhydroxid-hältiges Haldenabwasser.

In einem weiteren Aspekt ist das erfindungsgemäße Verfahren bevorzugt dadurch gekennzeichnet, dass das Kohlendioxid-haltige Abgas ein Verbrennungs- oder Abgas aus industriellen Großanlagen, wie fossilbefeuerte Kraftwerke, Hochöfen zur Produktion und Veredlung von Metallen, Erdgasaufbereitungsanlagen, Ammoniaksyntheseanlagen, Zementanlagen oder Kalkbrennereien, insbesondere aus Kalkbrennereien, ist.

Das erfindungsgemäße Verfahren ist bevorzugt durch die folgenden Schritte gekennzeichnet:
- Aufreinigen des gegebenenfalls konzentrierten industriell anfallenden Abwassers; und/oder
- Gewinnung von Kaliumhydroxid bzw. einem Kaliumsalz aus den gereinigten Abwässern; und
- Einsetzen einer wässrigen Lösung des gewonnenen Kaliumhydroxids oder Kaliumsalzes und/oder des gegebenenfalls konzentrierten industriell anfallenden Abwassers als Waschlösung bei der Gaswäsche und
- Abtrennung des während der Gaswäsche gebildeten Kaliumkarbonats aus der Waschlösung.

In einer bevorzugten Ausführungsform des erfindungsgemäßen Verfahrens sind die industriell anfallenden Abwässer vor der Konzentration bzw. Aufreinigung einer analytischen Qualitätskontrolle zu unterziehen, wobei unter anderem die Alkali-Bestandteile der Abwässer, insbesondere der Kaliumgehalt, ermittelt wird. In einem weiteren bevorzugten Merkmal des erfindungsgemäßen Verfahrens wird darüber hinaus der Ölanteil im Waschabwasser der Biodiesel-Produktion bestimmt.

Die in einer bevorzugten Ausführungsform durchgeführte Aufreinigung der industriell anfallenden Abwässer erfolgt erfindungsgemäß abhängig von der bei der Qualitätskontrolle ermittelten Zusammensetzung. Bei Verunreinigung mit Ölen und Fetten werden die industriell anfallenden Abwässer beispielsweise mit Demulgatoren zur Abtrennung der öligen Komponente behandelt. In einer weiteren Ausführungsform der vorliegenden Erfindung wird deshalb das bei der Biodiesel-Produktion anfallende Glyzerin- und/oder Seifen-haltige Waschabwasser mit einem Demulgator behandelt.

In noch einer Ausführungsform der vorliegenden Erfindung werden die gelösten Alkalisalze aus dem beim Kalibergbau anfallenden Haldenabwasser getrennt. Die Trennung der Alkalisalze, insbesondere des Kaliumchlorids, aus den Haldenabwässern kann beispielsweise durch Flotation, dem Heißlöseverfahren, ESTA-Verfahren, durch Kalte Vor- und Nachzersetzung oder durch fraktionierte Kristallisation erfolgen. In einer bevorzugten Ausführungsform des erfindungsgemäßen Verfahrens erfolgt die Abtrennung von Kaliumchlorid aus dem industriell anfallenden Abwasser durch fraktionierte Kristallisation.

Die fraktionierte Kristallisation zur Ausfällung von zwei oder mehr kristallisierbaren Substanzen ist ein aus dem Stand der Technik bekanntes Trennungsverfahren. Ein solches Verfahren ist zum Beispiel in der DE 10 2013 110 854 A1 beschrieben, worin ein Verfahren zur getrennten Abscheidung von Natriumchlorid (NaCl) und Kaliumchlorid (KCl) aus NaCl- und KCl-enthaltenden wässrigen Lösungen durch schrittweise Erwärmung und Abkühlung der Lösungen offenbart ist.

Liegt das Kalium in den industriell anfallenden Abwässern als Salz (beispielsweise KCl) und nicht als Lauge (KOH) vor, kann beispielsweise durch ein an sich bekanntes Elektrolyseverfahren aus dem Kaliumsalz Kaliumhydroxid gewonnen werden.

Ein aus dem Stand der Technik bekanntes Verfahren zur Umsetzung von Metallsalzen, wie den Chloriden von Alkalimetallen, zu ihren Hydroxiden, ist die Elektrolyse. Dabei reagiert das Chlorid des Alkalimetalls X mit Wasser zum entsprechenden Hydroxid XOH, Chlor und Wasserstoff:

2XCl + 2H₂O → 2XOH + Cl₂ + H₂

Demzufolge entsteht bei der Chloralkali-Elektrolyse ausgehend von einer wässrigen Kaliumchlorid-Lösung Kaliumhydroxid:

2KCl + 2H₂O → 2KOH + Cl₂ + H₂

Nach einem bevorzugten Merkmal der vorliegenden Erfindung erfolgt die Elektrolyse zur Gewinnung von Kaliumhydroxid aus einem industriell anfallenden Abwasser in einer Elektrolyseanlage, welche durch die im Kohlendioxid-haltigen Abgas vor seiner Wäsche enthaltenen thermischen Energie betrieben wird. In einer bevorzugten Ausführungsform des erfindungsgemäßen Verfahrens erfolgt die Gewinnung von Kaliumhydroxid aus den gereinigten Abwässern durch Chloralkali-Elektrolyse, wobei die im Kohlendioxid-haltigen Abgas enthaltene Energie für den Betrieb der Chloralkali-Elektrolyseanlage zur Gewinnung von Kaliumhydroxid verwendet wird (beispielsweise kann die bei der erforderlichen Abkühlung des Abgases vor seiner Wäsche freiwerdende thermische Energie direkt oder indirekt zum Betrieb von Generatoren verwendet werden, die durch die Generatoren gewonnene elektrische Energie kann dann für die Elektrolyse eingesetzt werden).

Nach einem weiteren besonders bevorzugten Merkmal der vorliegenden Erfindung weist die bei einer solchen Chloralkali-Elektrolyse gewonnene wässrige Lösung bzw. allgemein das gegebenenfalls nach Konzentration eingesetzte industriell anfallende Abwasser eine Konzentration von mindestens 20%, vorzugsweise mindestens 30%, besonders bevorzugt mindestens 35%, ganz besonders bevorzugt mindestens 40%, insbesondere mindestens 45% Kaliumhydroxy bzw. auf Kaliumhydroxy umgerechnetes Kaliumsalzes auf, um in einem weiteren Schritt des erfindungsgemäßen Verfahrens als Waschlösung bei der Abgaswäsche eingesetzt werden zu können. Wenn hier und im Folgenden eine Angabe in Prozent gegeben wird, so sind immer Gewichtsprozent gemeint.

In einer bevorzugten Ausführungsform der vorliegenden Erfindung enthält das industriell anfallende Abwasser Kalium in Form von Kalilauge, sodass ein Trennungsverfahren der Alkalisalze und gegebenenfalls auch das Elektrolyseverfahren hinfällig sind. Vorzugsweise wird das Kaliumhydroxid-haltige Abwasser vor dem Einsatz als Waschlösung bei der Abgaswäsche in einem Eindampfungsprozess aufkonzentriert. Nach einem besonders bevorzugten Merkmal der vorliegenden Erfindung wird das Kaliumhydroxid-haltige Abwasser durch Eindampfung auf eine etwa mindestens 25%ige, 30%ige, 35%ige, 40%ige, 45%ige oder 50%ige Kalilauge aufkonzentriert. Auch zum Eindampfen kann die durch die nötige Abkühlung des Abgases vor seiner Wäsche gewonnene thermische Energie verwendet werden.

Gemäß dem erfindungsgemäßen Verfahren wird die aus dem industriell anfallenden Abwasser gewonnene wässrige Lösung von Kaliumhydroxid in einem nächsten Schritt als Waschlösung bei der Abgaswäsche eingesetzt, wobei folgende Reaktion stattfindet:

2KOH + CO₂ → K₂CO₃ + H₂O

Kohlendioxid (CO₂) fällt bei zahlreichen Industrieprozessen als Verbrennung- bzw. Abgas an. Um die CO₂-Emission in die Atmosphäre zu verringern, ist die Abtrennung von CO₂ aus CO₂-haltigen industriellen Abgasen ein gängiges und teils auch gesetzlich vorgeschriebenes Verfahren.

In großtechnischem Maßstab erfolgt die Verbrennungs-, Rauch- bzw. Abgaswäsche mittels eines Absorptions-DesorptionsVerfahrens, wobei zuvor abgekühltes Rauch- bzw. Abgas in einem Absorber auf eine Waschlösung trifft, wodurch die Waschlösung durch das CO₂ des Gases gesättigt wird. Die CO₂-gesättigte Waschlösung wird dann durch einen Wärmetauscher geleitet und auf etwa 120°C erhitzt, wodurch das CO₂ wiederum in einem Desorber aus der Waschlösung gelöst und separat abgetrennt und gespeichert wird. Die CO₂-Wäsche-Technik ist bislang die einzige Abtrennungstechnik von CO₂ an Kraftwerken und Industrieanlagen. Ein solches Verfahren der Abtrennung von CO₂, die CO₂-Rauchgaswäsche, ist aus dem Stand der Technik bekannt (z.B. WO 2007/094675 A1). Ein Nachteil dieses Verfahrens ist, dass das umweltschädliche CO₂ nicht weiter verwertet, sondern lediglich abgetrennt wird.

In einer bevorzugten Ausführungsform des erfindungsgemäßen Verfahrens erfolgt die Gewinnung von Kaliumkarbonat durch Karbonisieren einer aus industriell anfallendem Abwasser stammenden wässrigen Lösung von Kaliumhydroxid oder Kaliumsalzen mittels Abgasen aus industriellen Großanlagen, bevorzugt aus Kalkbrennereien. Der Vorteil der Verwendung von in Kalköfen entstehenden Abgasen besteht darin, dass CO₂ Hauptbestandteil des Abgases ist und wenig Verunreinigungen vorliegen. Abgase von beispielsweise fossilen Brennkraftwerken sollten vor ihrer Wäsche in einem Absorber von Asche, Rußpartikel und schwefelhaltigen Gasen gereinigt werden.

Um die optimale Kohlendioxid-Löslichkeit in der erfindungsgemäßen eingesetzten Kalium-hältigen Waschlösung (beispielsweise Kalilauge stammend aus industriell anfallenden Abwässern) zu gewährleisten, soll die Reaktionstemperatur beim Vorgang der Karbonatisierung, nach einer bevorzugten Ausführungsform des erfindungsgemäßen Verfahrens, 100°C nicht überschreiten. In einer bevorzugten Ausführungsform des erfindungsgemäßen Verfahrens wird die Reaktionstemperatur so gewählt, dass Magnesium- und Natriumkarbonate in ihrer Löslichkeit eingeschränkt sind. Vorzugsweise erfolgt die Reaktionstemperatur beim Karbonatisieren der Kalium-hältigen Waschlösung bei höchstens 100°C, vorzugsweise höchstens 90°C, besonders bevorzugt höchstens 80°C, ganz besonders bevorzugt höchstens 70°C, insbesondere höchstens 60°C.

Um einen optimalen Prozessablauf zu gewährleisten, wird in einer weiteren bevorzugten Ausführungsform der vorliegenden Erfindung die Reaktionstemperatur und Kohlendioxidzufuhr während des Karbonatisierens der Kalium-hältigen Waschlösung, vorzugsweise kontinuierlich, gemessen.

In einem weiteren bevorzugten Schritt des erfindungsgemäßen Verfahrens, wird das durch Karbonatisieren der Kalium-hältigen Waschlösung aus dem industriell anfallenden Abwasser gewonnene Kaliumkarbonat abgetrennt oder durch einen Eindampfungsprozess konzentriert. Vorzugsweise wird das durch das vorliegende Verfahren gewonnene Kaliumkarbonat auf eine 10-60%ige, mehr bevorzugt 40-50%ige wässrige Kaliumkarbonatlösung konzentriert, auch hier kann wieder die bei der nötigen Abkühlung des Abgases vor seiner Wäsche gewonnene thermische Energie zum Einsatz kommen.

Nach einem weiteren besonderen Merkmal des erfindungsgemäßen Verfahrens wird das flüssige Kaliumkarbonat so lange einem Eindampfungsprozess ausgesetzt, bis die Karbonate der Kationen als feste Salze ausfallen.

In einer weiteren bevorzugten Ausführungsform der vorliegenden Erfindung findet das durch das erfindungsgemäße Verfahren hergestellte Kaliumkarbonat Verwendung als ökologisches Auftau- und Gefrierschutzmittel. In einer weiteren bevorzugten Ausführungsform wird das Kaliumkarbonat in flüssiger Form als Auftau- und Gefrierschutzmittel eingesetzt. In einer weiteren Ausführungsform kann das durch den Eindampfungsprozess entstandene feste Kaliumkarbonat auch als festes Streumittel eingesetzt werden.

Die in den beiliegenden bzw. der obenstehenden Beschreibung geoffenbarten einzelnen Ausführungsformen der vorliegenden Erfindung können beliebig miteinander kombiniert werden, jede Kombination der einzelnen Ausführungsformen wird hiermit ausdrücklich geoffenbart.

Das erfindungsgemäße Verfahren zur Herstellung von Kaliumkarbonat weist erhebliche Vorteile gegenüber den Verfahren gemäß dem Stand der Technik auf, so wird beispielsweise durch das erfindungsgemäße Verfahren die Entsorgungslogistik der industriell anfallenden Abwässer begünstigt, und zum anderen wird die CO₂-Belastung im Verbrennungs- bzw. Abgas von Industrieanlagen verringert. Außerdem werden durch das vorliegende erfindungsgemäße Verfahren die Produktionskosten von Kaliumkarbonat gesenkt, was den künftigen Großeinsatz als Auftau- und Gefrierschutzmittel begünstigt. Dies insbesondere deswegen, als eine erfindungsgemäß anfallende, Kaliumcarbonat in einer Menge von über 35 %, vorzugsweise über 50 % enthaltene wässrige Lösung direkt als Auftau- und Gefrierschutzmittel verwendet werden kann.

Unter dem Begriff industriell anfallendes Abwasser, wie er in der vorliegenden Beschreibung und den Ansprüchen verwendet wird, kommt jede Art von Abwasser in Betracht, welches Kalium in gelöster Form, beispielsweise als Chlorid oder Hydroxid enthält. Ein bevorzugt zum Einsatz kommendes industriell anfallendes Abwasser ist infolge der Verwendung in Aufbereitungs-, Veredelungs-, Weiterverabeitungs-, Produktions-, Verwertungs-, Konsumations- oder Dienstleistungs- sowie in Kühl-, Lösch-, Reinigungs-, Desinfektions- oder sonstigen nicht natürlichen Prozessen in seinen Eigenschaften derart verändert, dass es Gewässer in ihrer Beschaffenheit zu beeinträchtigen oder zu schädigen vermag.

Unter dem Begriff CO₂-haltiges Abgas, wie er in der vorliegenden Beschreibung und den Ansprüchen verwendet wird, wird vor allem das bei Verbrennungsprozessen entstehende Rauch-, Verbrennungs- oder Abgas verstanden, wie beispielsweise die Verbrennungsgase industrieller Großanlagen von fossilbefeuerten Kraftwerken, Hochöfen zur Produktion und Veredlung von Metallen, Erdgasaufbereitungsanlagen, Ammoniaksyntheseanlagen sowie Zementanlagen oder Kalkbrennereien, insbesondere von Kalkbrennereien.

Die vorliegende Erfindung wird anhand der folgenden Beispiele illustriert, auf welche sie selbstverständlich nicht eingeschränkt ist.

### Beispiel 1 - Gewinnung von Natriumchlorid (NaCl) aus Bittern von Meeressalinen (DE 102 56 046 A1)

Wie den oben angeführten Ausführungsformen der vorliegenden Erfindung entnommen werden kann, ist eine Abtrennung von Kaliumchlorid aus den industriell anfallenden Abwässern einer der möglichen Verfahrensschritte gemäß des erfindungsgemäßen Verfahrens. Eine solche Abtrennung wird anhand dem Beispiel der NaCl-Gewinnung aus Bittern von Meeressalinen beschrieben:
50 m³ Bittern aus einer Meeressaline mit 48 g/l MgSO₄, 76 g/l MgCl₂, 17 g/l KCl, 206 g/l NaCl werden mit 39 m³ Bittersalz-Mutterlauge mit 33 g/l MgSO₄, 265 g/l MgCl₂, 36 g/l KCl, 45 g/l NaCl gemischt und in einem Solarpond eingedampft. Unter Entzug von 30 m³ Wasser werden 9,6 t NaCl auskristallisiert und einer Salzwäsche zugeführt um qualitatives Speisesalz zu erhalten.

Die verbleibende Lösung (52 m³ mit 69 g/l MgSO₄, 264 g/l MgCl₂, 42 g/l KCl, 45 g/l NaCl) wird weiters von 25°C auf eine Temperatur von 0°C gekühlt, wobei es zur Auskristallisation von 3,9 t reinem Magnesiumsulfat kommt. Es verbleiben 52 m³ Mutterlauge, welche gegebenenfalls nach Abtrennung des noch vorhandenen Natriumchlorid, im erfindungsgemäßen Verfahren zur Wäsche von kohlendioxidhaltigen Abgasen verwendet werden können.

### Beispiel 2 - erfindungsgemäße Herstellung von Kaliumkarbonat unter Verwendung von Kalilauge

Eine zweigeteilte Absorptionskolonne im technischen Maßstab wird von einem Rauchgas mit einem CO₂-Gehalt von 8 bis 13% von unten nach oben durchströmt. Die am Kopf aufgegebene Kalilauge besitzt eine Konzentration von 44 bis 48%. Die Kalilauge rieselt durch den oberen Durchströmungsteil der Kolonne bis in den unteren Umlaufteil, über welchen der Kolonnensumpf umgepumpt wird. Die Reaktionstemperatur beim Karbonatisieren der Kalilauge liegt zwischen 60 und 80°C, vorzugsweise 65 bis 75°C.

Die entstandene wässrige Lösung von Kaliumkarbonat wird standhöhengeregelt aus dem Sumpfumlauf abgezogen. Der Flüssigkeitsstrom des Sumpfumlaufes wird für die Messung der Dichte und des pH-Wertes auf 40°C thermostatisiert, um die Glaselektroden für die pH-Messung nicht zu beschädigen. Der Soll-pH-Wert einer 50%igen Kaliumkarbonatlösung liegt bei 40°C bei 13,36. Der Dichtebereich der fertigen Kaliumkarbonat-Lösung beträgt etwa 1520 bis 1600 g/cm³, je nach Temperatur.

Die Gesamtalkalität der eingesetzten Kaliummenge, gerechnet als KOH, schwankt mit dem Natronlaugeanteil in dieser Lauge. Zur Erreichung der gewünschten Kaliumkarbonat-Qualität ist es daher empfehlenswert die Datenfelder für den Kaliumkarbonatgehalt als Funktion von Dichte und pH-Wert in Abhängigkeit von der Temperatur für den Schwankungsbereich der Qualität der eingesetzten Kalilauge zu erstellen.

## Patentansprüche

1. Verfahren zur Herstellung von Kaliumkarbonat (K₂CO₃) durch Wäsche von Kohlendioxid-haltigen Abgasen, **dadurch gekennzeichnet, dass** bei der Gaswäsche eine wässrige Lösung von Kaliumhydroxid bzw. Kaliumsalz, gewonnen aus industriell anfallendem Abwasser, verwendet wird.

2. Verfahren nach Anspruch 1, **dadurch gekennzeichnet, dass** das industriell anfallende Abwasser ein beim Kalibergbau anfallendes Haldenabwasser ist.

3. Verfahren nach Anspruch 1, **dadurch gekennzeichnet, dass** das industriell anfallende Abwasser ein bei der Biodiesel-Produktion anfallendes Waschabwasser ist.

4. Verfahren nach einem der Ansprüche 1 bis 3, **dadurch gekennzeichnet, dass** das Kohlendioxid-haltige Abgas ein Verbrennungs- oder Abgas aus industriellen Großanlagen, wie fossilbefeuerte Kraftwerke, Hochöfen zur Produktion und Veredlung von Metallen, Erdgasaufbereitungsanlagen, Ammoniaksyntheseanlagen, Zementanlagen oder Kalkbrennereien, insbesondere aus Kalkbrennereien, ist.

5. Verfahren nach einem der Ansprüche 1 bis 4, **gekennzeichnet durch** die folgenden Schritte:
- Aufreinigen des gegebenenfalls konzentrierten industriell anfallenden Abwassers; und/oder
- Gewinnung von Kaliumhydroxid bzw. einem Kaliumsalz aus den gereinigten Abwässern; und
- Einsetzen einer wässrigen Lösung des gewonnenen Kaliumhydroxids oder Kaliumsalzes und/oder des gegebenenfalls konzentrierten industriell anfallenden Abwassers als Waschlösung bei der Gaswäsche und
- Abtrennung des während der Gaswäsche gebildeten Kaliumkarbonats aus der Waschlösung.

6. Verfahren nach einem der Ansprüche 1 bis 5, **dadurch gekennzeichnet, dass** die Gewinnung von Kaliumhydroxid aus den gereinigten Abwässern durch Elektrolyse erfolgt, wobei die im Kohlendioxid-haltigen Abgas enthaltene Energie für den Betrieb einer Elektrolyseanlage zur Gewinnung von Kaliumhydroxid verwendet wird.

7. Verfahren nach Anspruch 6, **dadurch gekennzeichnet, dass** es sich bei der Elektrolyse um eine Chloralkali-Elektrolyse handelt.

8. Verfahren nach Anspruch 7, **dadurch gekennzeichnet, dass** die bei der Chloralkali-Elektrolyse hergestellte wässrige Lösung eine Konzentration von mindestens 20%, vorzugsweise mindestens 30%, besonders bevorzugt mindestens 35%, ganz besonders bevorzugt mindestens 40%, insbesondere mindestens 45% KOH aufweist.

9. Verfahren nach einem der Ansprüche 1 bis 8, **dadurch gekennzeichnet, dass** die Gewinnung von Kaliumchlorid aus den gereinigten Abwässern zur Verwendung in der Elektrolyse durch Flotation, dem Heißlöseverfahren, ESTA-Verfahren, durch Kalte Vor- und Nachzersetzung oder durch fraktionierte Kristallisation erfolgt, vorzugsweise durch fraktionierte Kristallisation.

10. Verfahren nach einem der Ansprüche 1 bis 9, **dadurch gekennzeichnet, dass** die Reaktionstemperatur beim Karbonatisieren der Kalilauge bzw. Kalium-hältigen Waschlösung bei höchstens 100°C, vorzugsweise höchstens 90°C, besonders bevorzugt höchstens 80°C, ganz besonders bevorzugt höchstens 70°C, insbesondere höchstens 60°C liegt.

11. Verfahren nach einem der Ansprüche 1 bis 10, **dadurch gekennzeichnet, dass** die wässrige Kaliumkarbonatlösung vor oder nach der Abtrennung durch Eindampfen konzentriert wird, vorzugsweise auf eine 10-60%ige, mehr bevorzugt auf eine 40-50%ige wässrige Kaliumkarbonatlösung.

12. Verwendung der nach einem der Ansprüche 1 bis 11 hergestellten wässrigen Kaliumkarbonatlösung als flüssiges Auftaumittel.

13. Verwendung der nach einem der Ansprüche 1 bis 11 hergestellten wässrigen Kaliumkarbonatlösung zur Gewinnung von Kaliumkarbonatgranulat.

14. Verwendung des Kaliumkarbonatgranulats nach Anspruch 13 als festes Streumittel.
